# EUROPÄISCHE PATENTSCHRIFT

(11) **EP 4 257 373 B1**
(45) Veröffentlichungstag und Bekanntmachung des Hinweises auf die Patenterteilung: **13.08.2025**
(21) Anmeldenummer: 23156115.0
(22) Anmeldetag: 10.02.2023
(51) Int. Cl.: B60C 9/22, B60C 11/02, B60C 1/00

(54) **FAHRZEUGLUFTREIFEN SOWIE SPULBANDAGE DESSELBEN**
PNEUMATIC VEHICLE TYRE AND WINDING BAND THEREOF
BANDAGE PNEUMATIQUE POUR VÉHICULE ET BANDAGE DE BOBINE POUR CE BANDAGE

(30) Priorität: 07.04.2022 DE 102022203476
(43) Veröffentlichungstag der Anmeldung: 11.10.2023
(73) Patentinhaber: Continental Reifen Deutschland GmbH, 30175 Hannover (DE)
(72) Erfinder: Rathe, Stefanie, 30165 Hannover (DE); Burkhart, Alexander, 30165 Hannover (DE); Lacayo-Pineda, Jorge, 30165 Hannover (DE)
(74) Vertreter: Continental Corporation

(56) Entgegenhaltungen:
- EP-A1- 1 795 375
- DE-A1- 102009 024 592
- DE-A1- 102014 225 821
- US-A1- 2004 084 120

## Beschreibung

Die Erfindung betrifft einen Fahrzeugluftreifen mit einer Karkasse und einem Laufstreifen sowie mindestens einer zwischen Laufstreifen und Karkasse angeordneten Spulbandage, die in Kautschukmasse eingebettete fadenförmige Festigkeitsträger umfasst.

Die Erfindung betrifft ferner auch eine Spulbandage eines Fahrzeugluftreifens, die mindestens einen fadenförmigen Festigkeitsträger umfasst, der in eine bandförmige Kautschukmasse eingebettet ist.

Fahrzeugluftreifen der eingangs genannten Art sind mannigfaltig bekannt und finden beispielsweise als Pkw-Reifen Anwendung. Wenn ein solcher Fahrzeugluftreifen seine Verschleißgrenze erreicht hat und das in den Laufstreifen eingebrachte Profil abgenutzt ist, ist die demgegenüber radial innenseitig angeordnete Karkasse, die über mindestens eine Spulbandage mit der dem aufgebrachten Laufstreifen verbunden ist, in der Regel noch gut brauchbar und kann im Rahmen der Runderneuerung eines solchen Fahrzeugluftreifens wiederverwendet werden.

Bei einer solchen Runderneuerung wird in einem ersten Arbeitsschritt der verschlissene Laufstreifen abgeschält bzw. abgetragen, wobei angestrebt wird, den Laufstreifen möglichst vollständig abzutragen, ohne die darunter befindlichen Komponenten, insbesondere Spulbandage und Karkasse zu beschädigen. Der Idealzustand dieses Arbeitsschrittes sieht insoweit die vollständige Entfernung des verschlissenen Laufstreifens vor, ohne dass die unterhalb des Laufstreifens befindlichen weiteren Komponenten des Fahrzeugluftreifens beschädigt werden.

Bei Lkw-Fahrzeugluftreifen wird die radial äußerste Schicht unterhalb des Laufstreifens üblicherweise aus einer gummierten Stahleinlage gebildet, die aufgrund ihrer elektrischen Leitfähigkeit von einer entsprechenden Messeinrichtung an einer zum Abtrag des Laufstreifens verwendeten Vorrichtung relativ einfach und zuverlässig detektiert werden kann, sodass automatisiert der Laufstreifen vollständig entfernt werden kann, ohne dass die darunter befindlichen Schichten beschädigt werden. Bei Fahrzeugluftreifen für Pkw hingegen ist üblicherweise zwischen der Karkasse und dem Laufstreifen mindestens eine Spulbandage vorgesehen, die in Kautschukmasse eingebettete fadenförmige Festigkeitsträger umfasst, welche nicht elektrisch leitfähig sind, da sie zum Beispiel aus textilen oder polymeren Fasern gebildet sind. Die Steuerung des Abtrags des Laufstreifens bis zu dessen vollständiger Entfernung setzt von daher ein erhebliches Maß an Erfahrung und ein geschultes Auge eines entsprechenden Bedienpersonals voraus, was aufwendig und fehleranfällig ist.

Aus der US 2004/0084120A1 ist es zudem bekannt, zur Steuerung des Laufstreifenabtrages im Rahmen einer automatisierten Maschinensteuerung Fahrzeugluftreifen zu verwenden, die im Querschnitt betrachtet unterhalb des Laufstreifens eine Schicht aus Gummimaterial aufweisen, in die fluoreszierendes Material eingebettet ist, welches zum Beispiel mittels eines geeigneten optischen Sensors detektiert werden kann, sofern der Laufstreifen vollständig abgetragen ist und insoweit weiterer Abtrag gestoppt werden kann. Die gemäß dieser Druckschrift vorgesehene zusätzliche Einbringung einer mit fluoreszierende Partikeln versehenen Schicht stellt jedoch einen zusätzlichen Arbeitsgang dar und beeinträchtigt die rationelle Fertigung derartiger Fahrzeugluftreifen.

Der weitere Stand der Technik wird gebildet durch DE 10 2009 024 592 A1, EP 1 795 375 A1 und DE 10 2014 225 821 A1.

Aufgabe der Erfindung ist es, einen Fahrzeugluftreifen der eingangs genannten Art vorzuschlagen, der bzw. dessen Komponenten die Nachteile des Standes der Technik überwinden.

Zur Lösung der gestellten Aufgabe wird erfindungsgemäß die Ausgestaltung eines Fahrzeugluftreifens gemäß den Merkmalen des Patentanspruchs 1 vorgeschlagen. Ferner schlägt die Erfindung auch eine Ausgestaltung einer Spulbandage gemäß den Merkmalen des Patentanspruches 2 vor.

Vorteilhafte Ausgestaltungen und Weiterbildungen der Erfindung sind Gegenstand der abhängigen Ansprüche.

Der erfindungsgemäße Vorschlag sieht vor, dass der Fahrzeugluftreifen mit Karkasse, Laufstreifen sowie zwischen Laufstreifen und Karkasse angeordneter Spulbandage so weitergebildet wird, dass die Kautschukmasse der unmittelbar an den Laufstreifen angrenzenden Spulbandage Farbpigmente in einer von schwarz abweichende Farbe und/oder fluoreszierende Farbstoffe enthält.

Erfindungsgemäß wird somit diejenige Spulbandage, die ohnehin im Aufbau des Fahrzeugluftreifens als die Karkasse außenseitig umgebende Lage vorgesehen ist, durch Zusatz von geeigneten Farbpigmenten und oder fluoreszierende Farbstoffe in die Kautschukmasse so modifiziert, dass sie mit einem geeigneten optischen Sensor beim Abtragen des Laufstreifens im Rahmen einer Runderneuerung zuverlässig detektiert werden kann, um anschließend den Abtrag des Laufstreifens zu stoppen.

Wenn der erfindungsgemäße Fahrzeugluftreifen lediglich eine Spulbandage zwischen Karkasse und Laufstreifen aufweist, wird diese in der erfindungsgemäßen Weise mit Farbpigmenten in einer von schwarz abweichende Farbe und/oder fluoreszierenden Farbstoffen versetzt. Weist hingegen der erfindungsgemäße Fahrzeugluftreifen mehrere aufeinanderliegende Spulbandagen auf, kann diejenige Spulbandage, die unmittelbar an den Laufstreifen angrenzt, d. h. die radial äußerste Spulbandage in der erfindungsgemäßen Weise mit Farbpigmenten in einer von schwarz abweichenden Farbe und/oder fluoreszierenden Farbstoffen versetzt werden. Alternativ können auch mehrere oder alle vorhandenen Spulbandagen in der erfindungsgemäßen Weise mit Farbpigmenten in einer von schwarz abweichende Farbe und/oder fluoreszierenden Farbstoffen versetzt werden, solange sichergestellt ist, dass in jedem Fall die radial äußerste Spulbandage in der erfindungsgemäßen Weise mit Farbpigmenten in einer von schwarz abweichende Farbe und/oder fluoreszierenden Farbstoffen versetzt ist.

Erfindungsgemäß kann von daher eine zuverlässige optische Detektion des vollständigen Abtrags des Laufstreifens anhand der farblich eingefärbten Spulbandage erfolgen und entsprechend eine Maschinensteuerung zum Abtrag des Laufstreifens gestoppt werden, ohne dass es der Einbringung zusätzlicher Schichten in den Aufbau des Fahrzeugluftreifens bedarf.

Erfindungsgemäß enthält die Kautschukmasse der unmittelbar an den Laufstreifen angrenzenden Spulbandage Farbpigmente auf Basis von Titandioxid in einer Menge von 20 bis 45 phr bezogen auf die Kautschukmasse. Derartige Farbpigmente auf Basis von Titandioxid bewirken eine weißliche Einfärbung bzw. deutliche Aufhellung der Spulbandage, wobei durch Zusatz der Farbpigmente in der angegebenen Menge sichergestellt wird, dass einerseits ein zuverlässig messbarer Farbeffekt hervortritt, d. h. genügend Farbpigmente in die Kautschukmasse eingearbeitet sind, andererseits aber auch keine übermäßige Menge an Farbpigmenten in die Kautschukmasse eingebracht wird, die die die physikalischen Eigenschaften der Kautschukmasse, die für den Fahrzeugluftreifen wichtig sind, negativ beeinflussen würden.

Anstelle von oder zusätzlich zu Titandioxid kommen auch andere Pigmente in Betracht, beispielsweise anorganische Pigmente auf der Basis von Oxiden und Hydroxiden, wie Eisencyanblau, Ultramarin, Bismutpigmente, Cadmiumpigmente, Eisenoxidpigmente, Chrompigmente und Mischphasenoxidpigmente, natürliche organische Pigmente, wie Indischgelb und Indigo und/oder synthetische organische Pigmente aus den Gruppen der Azopigmente und der polyzyklischen Pigmente.

Die im Rahmen der Erfindung ebenfalls vorgeschlagene Spulbandage eines Fahrzeugluftreifens umfasst mindestens einen fadenförmigen Festigkeitsträger, der in eine bandförmige Kautschukmasse eingebettet ist, welche Farbpigmente in einer von schwarz abweichende Farbe und/oder fluoreszierende Farbstoffe enthält.

Erfindungsgemäß ist vorgesehen, dass die in die Spulbandage eingebrachten Farbpigmente auf Basis von Titandioxid in einer Menge von 20 bis 45 phr bezogen auf die Kautschukmasse eingesetzt sind.

Auch hier können anstelle von oder zusätzlich zu Titandioxid auch andere Pigmente in Betracht kommen, beispielsweise anorganische Pigmente auf der Basis von Oxiden und Hydroxiden, wie Eisencyanblau, Ultramarin, Bismutpigmente, Cadmiumpigmente, Eisenoxidpigmente, Chrompigmente und Mischphasenoxidpigmente, natürliche organische Pigmente, wie Indischgelb und Indigo und/oder synthetische organische Pigmente aus den Gruppen der Azopigmente und der polyzyklischen Pigmente.

Weiterhin kann vorgesehen sein, dass der fadenförmige Festigkeitsträger von einem Mono- oder Multifilament auf Basis von Polyamid gebildet ist.

Weitere Ausgestaltungen und Einzelheiten der Erfindung werden nachfolgend anhand eines Ausführungsbeispiels in der Zeichnung dargestellt. Es zeigen:
- Figur 1: in schematischer Querschnittsdarstellung einen Fahrzeugluftreifen, der seine Verschleißgrenze erreicht hat;
- Figur 2: in vergrößerter Darstellung einen Querschnitt durch eine Spulbandage;
- Figur 3: der Fahrzeugluftreifen gemäß Figur 1 in einem Zwischenschritt während der Runderneuerung;
- Figur 4: den Fahrzeugluftreifen gemäß Figur 1 mit durch Runderneuerung ausgetauschtem Laufstreifen

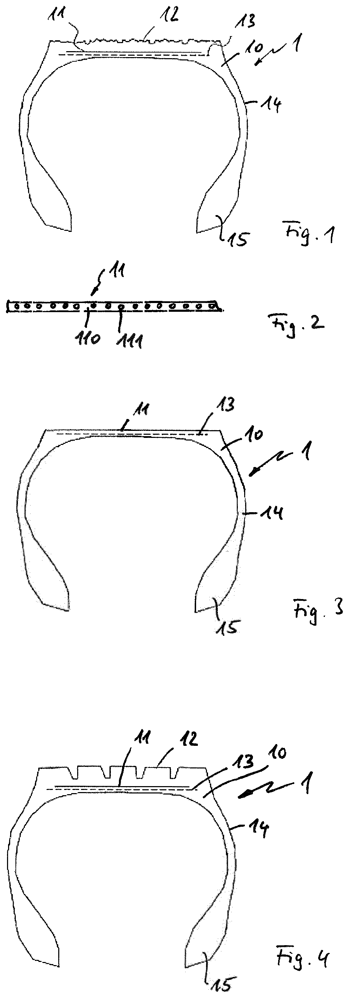

Aus der Figur 1 ist in einer vereinfachten Querschnittsdarstellung ein mit Bezugszeichen 1 gekennzeichneter Fahrzeugluftreifen, zum Beispiel ein Pkw-Reifen dargestellt, der in an sich bekannter Weise eine Karkasse 10 mit Seitenwänden 14 und Wulstbereichen 15 zur Befestigung in einer hier nicht dargestellten Felge sowie radial außenseitig auf die Karkasse 10 aufgebrachten Laufstreifen 12 aufweist, der das Profil des Fahrzeugluftreifens 1 trägt. In die Karkasse 10 sind Gürtellagen 13 eingebracht sowie radial außenseitig als äußere Einhüllung der Karkasse 10 mitsamt der Gürtellagen 13 und als Verbindung zum aufgebrachten Laufstreifen 12 ist eine Spulbandage 11 vorgesehen, die in näheren Einzelheiten aus der Figur 2 ersichtlich ist.

Die Spulbandage 11 umfasst einen fadenförmigen Festigkeitsträger 111, zum Beispiel einen einzelnen, umlaufend gewickelten Festigkeitsträger 111 aus einem Monofilament auf Basis von Polyamid, der in eine bandförmige Kautschukmasse 110 eingebettet ist, die der Spulbandage 11 ein bandförmiges Erscheinungsbild gibt.

Der in der Figur 1 dargestellte Fahrzeugluftreifen 1 hat ersichtlich seine Verschleißgrenze erreicht, denn das radial außenseitig in den Laufstreifen 12 eingebrachte Profil ist durch Abrieb weitgehend aufgebraucht.

Wenn ein solcher Fahrzeugluftreifen 1 gemäß Figur 1 weiter genutzt werden soll, wird im Rahmen einer an sich bekannten Runderneuerung dieser Fahrzeugluftreifen 1 in einem ersten Schritt in eine entsprechende Bearbeitungsmaschine eingespannt, die mittels entsprechender Abtrag- oder Schälwerkzeuge den verschlissenen Laufstreifen 12 vollständig entfernt, d. h. den Laufstreifen 12 idealerweise soweit abträgt, bis die im Übergangsbereich zwischen Karkasse 10 und Laufstreifen 12 angeordnete Spulbandage 11 gerade vollständig freigelegt ist, ohne dass die Spulbandage 11 selbst verletzt wird.

Um diesen optimalen Grad der Abtragung des Laufstreifens 12 zu erreichen, ist die Spulbandage 11 durch Zusatz geeigneter Farbpigmente auf Basis von Titandioxid in einer Menge von 20 bis 45 phr, bezogen auf die Kautschukmasse 110 weißlich eingefärbt und weist somit gegenüber dem übrigen, üblicherweise schwarz eingefärbten Komponenten des Fahrzeugluftreifens 1 entsprechend hohen Farbkontrast auf, der mittels einer geeigneten optischen Einrichtung auf einfache Weise detektiert werden kann. Sobald der schwarze Laufstreifen 12 vollständig abgetragen ist, erscheint die demgegenüber weißlich kolorierte Spulbandage 11 und dieser optisch deutlich sichtbare Farbwechsel zeigt an, dass der weitere Abtrag des Laufstreifens 12 gestoppt werden kann, da optimale Abtrag gemäß Figur 3 erreicht worden ist. In diesem Zustand gemäß Figur 3 bildet die Spulbandage 11 die radial außenseitige Einhüllung der Karkasse 1, ist selbst jedoch mechanisch unversehrt.

Auf den solchermaßen präparierten Reifenrohling kann sodann ein neuer Laufstreifen 12 radial außenseitig auf die Spulbandage 1 aufgebracht und anschließend vulkanisiert werden, wobei ein entsprechend neues Reifenprofil in den Laufstreifen 12 eingebracht wird. Dieser Zustand eines durch Runderneuerung wiederverwendbaren Fahrzeugluftreifens 1 ist in der Figur 4 dargestellt.

Mit der vorangehenden erläuterten Erfindung gelingt es, den Abtrag des Laufstreifens 12 im Rahmen der Runderneuerung vollautomatisch mit hoher Präzision durchzuführen, ohne dass die Gefahr besteht, dass die unterhalb des Laufstreifens 12 angeordnete Struktur des Fahrzeugluftreifens 1 beschädigt wird.

Da die erfindungsgemäß vorgesehene Regelgröße von der entsprechend eingefärbten Spulbandage 11 gebildet wird, ist dies unabhängig von der exakten Kontur der Reifenkarkasse unmittelbar vor dem Beginn der Runderneuerung, die gewissen Schwankungen unterzogen ist.

Anstelle einer Pigmentierung mit Titandioxid können auch fluoreszierende Farbstoffe zum Einsatz kommen.

Die in die Kautschukmasse 110 eingebrachten Farbpigmente und/oder fluoreszierenden Farbstoffe können beispielsweise mittels Laserreflexion oder Fluoreszenzdetektoren automatisiert abgetastet werden. Selbstverständlich bleibt auch eine manuelle Betriebsweise durch visuelle Prüfung auf eine eingefärbte Schicht weiterhin möglich.

### Bezugszeichenliste:

- 1:: Fahrzeugluftreifen
- 10:: Karkasse
- 11:: Spulbandage
- 12:: Laufstreifen
- 13:: Gürtellagen
- 14:: Seitenwand
- 15:: Wulstbereich
- 110:: Kautschukmasse
- 111:: Festigkeitsträger

## Patentansprüche

1. Fahrzeugluftreifen (1) mit einer Karkasse (10) und einem Laufstreifen (12) sowie mindestens einer zwischen Laufstreifen (12) und Karkasse (10) angeordneten Spulbandage (11), die in Kautschukmasse (110) eingebettete fadenförmige Festigkeitsträger (111) umfasst, **wobei** die Kautschukmasse (110) der unmittelbar an den Laufstreifen (12) angrenzenden Spulbandage (11) Farbpigmente in einer von schwarz abweichende Farbe und/oder fluoreszierende Farbstoffe enthält, wobei Farbpigmente auf Basis von Titandioxid in einer Menge von 1 bis 100 phr bezogen auf die Kautschukmasse (110) eingesetzt sind, **dadurch gekennzeichnet, dass** die Farbpigmente auf Basis von Titandioxid in einer Menge von 20 bis 45 phr bezogen auf die Kautschukmasse (110) eingesetzt sind.

2. Spulbandage (11) eines Fahrzeugluftreifens (1), umfassend mindestens einen fadenförmigen Festigkeitsträger (111), der in eine bandförmige Kautschukmasse (110) eingebettet ist, welche Farbpigmente in einer von schwarz abweichende Farbe und/oder fluoreszierende Farbstoffe enthält, wobei Farbpigmente auf Basis von Titandioxid in einer Menge von 1 bis 100 phr (parts per hundred) bezogen auf die Kautschukmasse (110) eingesetzt sind, **dadurch gekennzeichnet, dass** die Farbpigmente auf Basis von Titandioxid in einer Menge von 20 bis 45 phr bezogen auf die Kautschukmasse (110) eingesetzt sind.

3. Spulbandage (11) nach Anspruch 2, **dadurch gekennzeichnet, dass** der fadenförmige Festigkeitsträger (111) von einem Mono- oder Multifilament auf Basis von Polyamid gebildet ist.

## Claims

1. Pneumatic vehicle tyre (1) comprising a carcass (10) and a tread (12) and at least one wound bandage (11) arranged between the tread (12) and the carcass (10) which comprises threadlike strength members (111) embedded in rubber composition (110), wherein the rubber composition (110) of the wound bandage (11) directly adjacent to the tread (12) contains colour pigments in a colour distinct from black and/or fluorescent dyes, wherein colour pigments based on titanium dioxide are employed in an amount of 1 to 100 phr based on the rubber composition (110), **characterized in that** that the colour pigments based on titanium dioxide are employed in an amount of 20 to 45 phr based on the rubber composition (110).

2. Wound bandage (11) of a pneumatic vehicle tyre (1) comprising at least one threadlike strength member (111) embedded in a ribbonlike rubber composition (110) containing colour pigments in a colour distinct from black and/or fluorescent dyes, wherein colour pigments based on titanium dioxide are employed in an amount of 1 to 100 phr (parts per hundred) based on the rubber composition (110), **characterized in that** the colour pigments based on titanium dioxide are employed in an amount of 20 to 45 phr based on the rubber composition (110).

3. Wound bandage (11) according to Claim 2, **characterized in that** the threadlike strength member (111) is formed by a mono- or multifilament based on polyamide.

## Revendications

1. Pneumatique de véhicule (1) avec une carcasse (10) et une bande de roulement (12) ainsi qu'au moins un bandage en spires (11) agencé entre la bande de roulement (12) et la carcasse (10), qui comprend des supports de résistance (111) filiformes noyés dans une masse de caoutchouc (110), la masse de caoutchouc (110) du bandage en spires (11) directement adjacent à la bande de roulement (12) contenant des pigments colorés d'une couleur différente du noir et/ou des colorants fluorescents, des pigments colorés à base de dioxyde de titane étant utilisés en une quantité de 1 à 100 pce par rapport à la masse de caoutchouc (110), **caractérisé en ce que** les pigments colorés à base de dioxyde de titane sont utilisés en une quantité de 20 à 45 pce par rapport à la masse de caoutchouc (110).

2. Bandage en spires (11) d'un pneumatique de véhicule (1), comprenant au moins un support de résistance filiforme (111), qui est noyé dans une masse de caoutchouc (110) en forme de bande, qui contient des pigments colorés d'une couleur différente du noir et/ou des colorants fluorescents, des pigments colorés à base de dioxyde de titane étant utilisés en une quantité de 1 à 100 ce (parties par cent) par rapport à la masse de caoutchouc (110), **caractérisé en ce que** les pigments colorés à base de dioxyde de titane sont utilisés en une quantité de 20 à 45 pce par rapport à la masse de caoutchouc (110).

3. Bandage en spires (11) selon la revendication 2, **caractérisé en ce que** le support de résistance filiforme (111) est formé d'un mono- ou multifilament à base de polyamide.
